# EUROPEAN PATENT APPLICATION

(11) **EP 4 032 862 A1**
(43) Date of publication of application: **27.07.2022**
(21) Application number: 19801393.0
(22) Date of filing: 20.09.2019
(51) Int. Cl.: C02F 1/467, C02F 1/72, C02F 1/78, C02F 1/461, C02F 1/66

(54) **METHOD AND SYSTEM FOR DISINFECTING WITH AN OXIDANT SOLUTION AND OXIDANT SOLUTION USED**

(71) Applicant: Baco Environmental Engineering & Technology, S.L., 08022 Barcelona (ES)
(72) Inventor: SAMANI MAJD, Amir, Masoud, 08022 BARCELONA (ES); SAMANI MAJD, Saeed, 08022 BARCELONA (ES); DADKHAH, Ehsan, 08022 BARCELONA (ES)
(74) Representative: Herrero & Asociados, S.L.
(86) International application number: PCT/ES2019/070627
(87) International publication number: WO 2021/053248

(57) **Abstract**

The present invention relates to a method and system to disinfect with an oxidant solution and the oxidant solution used. The oxidant solution is useful for example for removing biofilms constituents and can be used in a wide variety of setting, for example swimming pools, hot spring sites, industrial plants and cooling towers, reverse osmosis membranes, municipal installations and sanitary distribution systems.

## Description

The present invention relates to a method and system to disinfect with an oxidant solution and the oxidant solution used. The oxidant solution is useful for example for removing biofilms constituents and can be used in a wide variety of setting, for example swimming pools, hot spring sites, industrial plants and cooling towers, reverse osmosis membranes, municipal installations and sanitary distribution systems.

### BACKGROUND ART

Biofilms can be formed and sustained in any aqueous environment including water distribution lines, water storage tanks, open channels and pipe pyramid based on the environmental situation. The biofilm is indeed a complex of different microorganism and their disposals when they begin to excrete substances which are slimy and sticky and allow them to be a microscale layer adhered to the surfaces. A stratum of biofilm may consist of different types of bacteria, fungi, algae, protozoa and even viruses, dead or alive. That combination inside a biofilm layer makes it resistant to chlorine, one of the most common biocides, since it is changed to slightly impenetrable layer for the chlorine molecules. Therefore, it will be hard to affect the microorganisms once initial adhesion takes place. Moreover, that layer of chlorine resistant microorganisms can be pathogenic and host disease-causing microorganism such as Legionella, Listeria and temperature-resistant bacterial spores.

To eliminate or reduce the biofilm problem various mechanical and chemical methods are used. The most common approach is chemical treatment primarily using biocides and concentrations for decontamination recirculating water systems, however these recommendations are not suited for every system and target microorganisms.

The patent document US9034812 describes a composition for treating the formation and growth of a biofilm comprising at least one D-amino acid and at least one biocide comprises tetrakis hydroxymethyl phosphonium sulfate (THPS). The THPS shows some problems, for example the THPS can be easily degraded, and the microorganism had the ability to degrade and use the added biocide to growth.

Thus, from what is known in the art, it is derived that the development of a new composition, system and method to eliminate the biofilm in a simple and cost effective, manner and with good yield.

### SUMMARY OF THE INVENTION

Inventors have found a method to disinfect with an oxidant solution. The oxidant solution is useful for treating water and removing biofilms with a good yield, cost effective, accessible, safe and secure, user friendly and ecological manner.

A first aspect of the present invention refers to a method to disinfect comprising the steps of:
a) mixing water and a brine solution wherein the brine solution is comprised from 1% to 10% in weight;
b) feeding a reactor comprising from three to five electrochemical cells with the mix obtained in the step a);
c) applying an electrical current with a current density from 80 mA/cm² to 120 mA/cm² to the cells in the reactor;
d) dosing the oxidant solution at a volume ratio from 1:500 to 1:2000 ppm.

The term "brine solution" as used herein, refer to solutions of sodium chloride and solutions of potassium chloride.

The second aspect of the present invention refers to an onsite generation system comprising:
a)a brine tank;
b)a water tank;
c)the brine and the water tank feed a mixed tank;
d)the mixed tank feeds a reactor that comprises from three to five electrochemical cells; and
e)a dosing or chemical pump to pump the product obtained in the reactor.

The onsite generation replaces numerous delivered chemicals for water treatment including: bulk sodium hypochlorite, chlorine dioxide, chlorine gas, iodine, hydrogen peroxide, calcium hypochlorite, ozone, bromine and other disinfection approaches, depending on the application and/or water chemistry such as glutaraldehyde, quaternary ammonium compounds, isothialozine, silver copper ion, ultraviolet light.

The third aspect of the invention is a oxidant solution comprising: ozone, hydrogen peroxide, chlorine dioxide, chlorine gas, hypochlorite salt, hypochlorous acid and oxygen, wherein the pH is from 6,5 to 9.

### BRIEF DESCRIPTION OF THE DRAWINGS

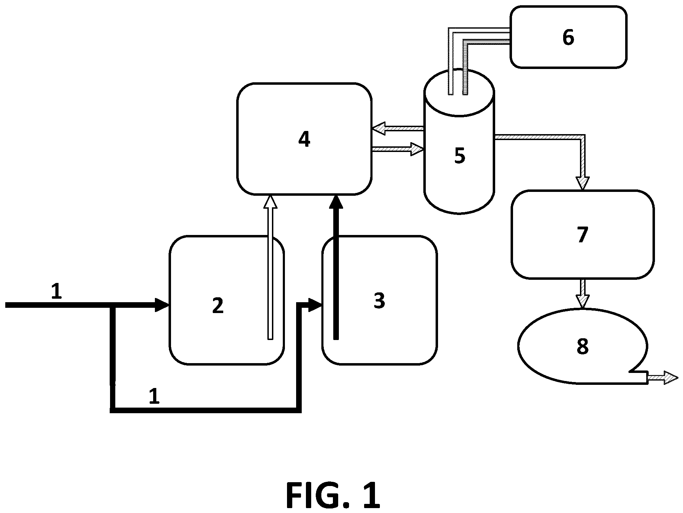

FIG. 1 shows a preferred embodiment of the onsite generation system of the invention schematically.

### DETAILED DESCRIPTION OF THE INVENTION

As it is mentioned above the first aspect of the invention refers to a method to disinfect comprising the steps of:
a) mixing water and a brine solution wherein the brine solution is comprised 1% to 10% in weight;
b) feeding a reactor comprising from three to five electrochemical cells with the mix obtained in the step a);
c) applying an electrical current with a current density from 80 mA/cm² to 120 mA/cm² to the cells in the reactor;
d) dosing the oxidant solution at a volume ratio from 1:500 to 1:2000 ppm.

In a particular embodiment of the first aspect of the invention the water previously to the step a) goes through a softener and then the water splits in two lines, one line is used to feed a salt filled tank, creating a saturated brine, the other line acting as a dilution stream prior to the step c).

In a preferred embodiment after the step c) the oxidant solution obtained in the step c) is stored in an oxidants solution storage tank. In a more preferred embodiment the concentration of the oxidants in the solution stored is from 7000 to 8000 ppm.

In a particular embodiment after the step c) the hydrogen gas produced in the reactor is removed from the reactor and/or from the oxidants solution storage tank.

In a particular embodiment before the step a) there is a step of washing the cell in the reactor passing a reverse current. The cells are arranged so all electrodes make contact with the water and brine solution, and electrical current flows through the cell. In turn, this current causes chemical reactions on the surfaces of both electrodes that eventually produce the oxidant solution. As the cell operates, calcium and magnesium scales will build up on the cell electrodes, reducing the efficiency. Traditionally, a manual acid washing procedure is employed to removes these scales.

In a preferred embodiment the temperature of the water in the step a) is from 18°C and 48°C.

In a preferred embodiment the pressure of the water in the step a) is from 25 and 100 psi.

In a preferred embodiment in the step a) an acid selected from: hydrochloric acid, sulfuric acid or nitric acid is mixed together with the water and the brine. In a more preferred embodiment in the step a) is also mixed a nutrient for the soil. Examples of these nutrients are N₂ or S.

This acid is added in order to decrease the adverse effect of cation ions when the solution is used to disinfect the irrigation water.

In a preferred embodiment in the step a) the brine is between 2% to 7%.

The second aspect of the present invention refers to an onsite generation system comprising:
a) a brine tank (2);
b) a water tank (3);
c) the brine and the water tank feed a mixed tank (4);
d) the mixed tank (4) feeds a reactor (5) that comprises from three to five electrochemical cells; and
e) a dosing (8) or chemical pump to pump the product obtained in the reactor.

In a preferred embodiment the onsite generation system comprised an oxidants solution storage tank (7).

A preferred embodiment of the second aspect of the invention is showed in FIG. 1 the system of the invention consisting in: an inlet water (1) that feeds a saturated brine tank (2) and a water tank (3); the water tank (3) and the saturated brine tank (2) feed the mixed tank (4) that at the same time feeds the reactor (5) that comprises from three to five electrochemical cells and shows an external power supply (6); the product obtained in the reactor (5) is carried out to a oxidants solution storage tank (7), finally the mixed oxidants are pumped by a dosing pump (8).

In a preferred embodiment the system operates via a signal from the level switch/transmitter located in the downstream oxidants solution storage tank (7) conducted with a Programmable Logic Controller (PLC) and some sensors. This means very minimal operator attention is required during normal operation.

In a particular embodiment the system is controlled by a control panel.

In a particular embodiment, the dosing pump is selected between: venturi pump, centrifugal feed pump; chemical metering pump.

In a particular embodiment the reactor (5) and the oxidants solution storage tank (7) includes vents and/or dilution air blowers to removed hydrogen.

In a particular embodiment the system presents sensor and programmable logic controller.

In a preferent embodiment the electrochemical cell comprises at least two electrodes. More preferentially the electrode is a titanium. In a particular embodiment, the electrode is a titanium with a coating of titanium oxide. In a preferent embodiment the electrode is rectangular. In a more preferent embodiment the size is from 250 cm² to 350cm².

The third aspect of the invention is a oxidant solution comprising: ozone, hydrogen peroxide, chlorine dioxide, chlorine gas, hypochlorite salt, hypochlorous acid and oxygen, wherein the pH is from 6,5 to 9.

In a preferred embodiment the pH is from 6,5 to 7.

In a preferred embodiment in the composition of the oxidant the hypochlorite salt, hypochlorite acid and soluble chlorine gas is comprised between 65%, to 85% hydrogen peroxide is comprised from 15% to 25% and chlorine dioxide, ozone and oxygen is comprised from 2.5% to 7.5%.

In a particular embodiment the brine is CINa and the chemical reaction on the electrochemical cells are:

NaCl + H₂O →NaOCl + H₂

oxidation reactions are carried out at the anode where two chloride ions (Cl⁻) are stripped of one electron each to produce molecular chlorine.

2Cl⁻→Cl₂+2e⁻

Then the molecular chlorine dissolves in water to produce hypochlorous acid (HOCI).

Cl₂+ H₂O →HOCl + H⁺ + Cl⁻

Chlorine production is balanced by the reduction reactions that occur at the cathode where water is converted into hydroxide ions and hydrogen gas.

2H₂O + 2e⁻→2OH⁻ + H₂

The hydroxide ions produced at the cathode then react with the hypochlorous acid produced at the anode, producing the hypochlorite anion (ClO⁻), which is charge balanced with sodium cations (Na⁺) that originally came from the salt.

HOCl + OH⁻→ H₂O + OCl⁻

The following half reactions are conducted for ozone generation. Hydrogen and oxygen are produced at the cathode and anode electrodes, respectively. The chloride ion concentration is very low in this stage but adequate for electrical conductivity.

2H₂O+ 2e⁻ →H₂+2OH⁻-0/8277 V

2H₂O →O₂ + 4H⁺ + 4e⁻-1/229 V

By increasing the voltage current, the following half reaction happens at anode electrode. This phenomenon is influenced by the electrolyzing condition. The ozone could be smelled during the process of ozone generation if the reactor was not sealed.

3H₂O →O₃ + 6H⁺ + 6e⁻-1/53 V

The ozone can be kept generated by saving the process condition till the ozone reaches the saturation level at 570 mg/L at 20° C (or 1050 mg/L at 0° C).

It's remarkable that different half reactions take place with different oxidation reduction potential for ozone and hydrogen peroxide generation.

2H₂O →H₂O₂ + 2H⁺ + 2e⁻-1/776 V

O₂ + H₂O →O₃ + 2H⁺ +2e⁻-2/076 V

O₂ + 2OH⁻ →O₃ + H₂O + 2e⁻-1/24 V

3H₂O →O₃ + 6H⁺ +6e⁻-1/53 V

O₂ + 2H⁺ + 2 e⁻ →H₂O₂ 0.7 V

2H₂O →H₂O₂+2H⁺ +2e⁻-1/776 V

HO₂ + H⁺ + e⁻ →H₂O₂ -1/495 V

In the next step the chloride ion is increased and produces more chlorine gas, that decreases the chloride ion and produces ClO₂ when CLO⁻ and Cl₂ (aq) are available.

2Cl⁻ →Cl₂ + 2e⁻-1/35827 V

1/2Cl₂ +H₂O →HClO + H⁺ + e⁻-1/611 V

Cl⁻ +H₂O →HClO + H⁺ + e⁻-1/482 V

Cl⁻ + 2OH⁻ →ClO⁻ + H₂O + 2e⁻-0/81 V

NaCl + H₂O + 2e⁻ →NaOCl+H₂

HCIO + H₂O →ClO₂+3H⁺ + 3e-

### EXAMPLES

The following examples are provided for illustrative means and are not meant to be limiting of the present invention.

### Example 1.

In the present example in the mixture water/brine the brine is in a 3,2% weight/total weight to produce 8000 ppm solution. The reactor contains three electrochemical cells in order to charge 100 mA/cm² current density to the electrolyte. The composition of the oxidant solution is: free available chlorine compound that are: sodium hypochlorite, hypochlorite acid and soluble chlorine gas 75%, hydrogen peroxide 20% and ozone and oxygen 5%.

The presence of free available chlorine in water is correlated with the absence of most disease-causing organisms, and thus is a measure of the potability of water.

Table 1. Compares the residual free available chlorine (FAC) in 4 different disinfection solutions including the composition of the present invention, commercial bleach, synthesized hypochlorite sodium 15% and calcium hypochlorite.

The measured residuals after 30 minutes and illustrated that the composition of the present invention can perfectly compete with other oxidants even if they are in higher concentration.

**Table 1. FAC residuals if disinfection solutions after 30 minutes in ppm**

| Experimental number | Control | Calcium Hypochlorite | Sodium Hypochlorite 15% | Bleach | Present invention |
|---|---|---|---|---|---|
| 1 | 0 | 0.45 | 0.31 | 0.38 | 0.55 |
| 2 | 0 | 0.41 | 0.23 | 0.26 | 0.31 |
| 3 | 0 | 0.45 | 0.44 | 0.38 | 0.58 |
| 4 | 0 | 0.26 | 0.16 | 0.26 | 0.19 |
| 5 | 0 | 0.41 | 0.22 | 0.25 | 0.43 |
| MEAN | 0 | 0.396 | 0.272 | 0.306 | 0.412 |

Please see that the composition of the present invention shows the highest FAC in ppm, this is positive to ensure the maximum efficacy.

### Disinfecting Wastewater

Table 2 shows the comparison between the ability of removing fecal coliforms from municipal raw sewage by using different disinfection solutions in 7 samples. Based on the results, the solution of the present invention was the only disinfection solution which was able to decrease the fecal coliform under 100 MPN in the logarithmic scale.

**Table 2. Fecal coliforms removal by different disinfection solutions**

| N° | Control | Calcium hypochlorite | Sodium hypochlorite 15% | Bleach | Example 1 |
|---|---|---|---|---|---|
| 1 | 130000 | <1.8 | <1.8 | 20 | 20 |
| 2 | 110000 | 330 | 330 | 130 | 130 |
| 3 | 240000 | 300 | 1700 | 800 | 170 |
| 4 | 270000 | 230 | 300 | 110 | 20 |
| 5 | 1700000 | 230 | 1100 | 330 | <1.8 |
| 6 | 9200000 | 2400 | 1700 | 790 | 230 |
| 7 | 78000 | 130 | 1700 | 9200 | <1.8 |
| MEAN | 1775714 | 603.33 | 1138.33 | 1625.71 | 114 |

### HPC bacteria removal

Table 3 shows how the solution of the present invention was able to decrease the heterotroph bacteria to lower than 6000 units while the others just stayed above 20000 units.

**Table 3. HPC bacteria removal by different disinfection solutions.**

| Sample | Control | Calcium hypochlorite | Sodium hypochlorite 15% | Bleach | Example 1 |
|---|---|---|---|---|---|
| 1 | 800000 | 9000 | 75000 | 120000 | 14000 |
| 2 | 300000 | 10000 | 10000 | 61000 | 6000 |
| 3 | 30000 | 2000 | 10000 | 4000 | 1400 |
| 4 | 500000 | 61000 | 122000 | 91000 | 3000 |
| 5 | 470000 | 7000 | 90000 | 80000 | 8400 |
| MEAN | 420000 | 17800 | 61400 | 71200 | 6560 |

### Total coliform Removal

Table 4 shows the logarithmic scale of total coliforms removal from wastewater. The solution of the present invention results shows about average of 380 MPN of total coliforms in 100 mm of wastewater, complying with the standards, and better performance regarding other.

| Sample | Control | Calcium Hypochlorite | Sodium hypochlorite 15% | Bleach | Example 1 |
|---|---|---|---|---|---|
| 1 | 130000 | 230 | 40 | 40 | 130 |
| 2 | 110000 | 490 | 790 | 330 | 230 |
| 3 | 3000 | 2200 | 1600 | 3000 | 1300 |
| 4 | 2400000 | 1700 | 16000 | 16000 | 500 |
| 5 | 1300000 | 500 | 16000 | 1100 | 230 |
| 6 | 1700000 | 330 | 16000 | 490 | <1.8 |
| 7 | 16000000 | 16000 | 16000 | 16000 | 230 |
| 8 | 780000 | 230 | 16000 | 16000 | 45 |
| mean | 2802875 | 2710 | 10303.8 | 6620 | 380.71 |

## Claims

1. A method to disinfect comprising the steps of:
a)mixing water and a brine solution wherein the brine solution is comprised 1% to 10% in weight;
b) feeding a reactor comprising from three to five electrochemical cells with the mix obtained in the step a);
c) applying an electrical current with a current density from 80 mA/cm² to 120 mA/cm² to the cells in the reactor;
d)dosing the oxidant solution at a volume ratio from 1:500 to 1:2000 ppm.

2. The method of claim 1 wherein the water previously to the step a) goes through a softener and then the water splits in two lines, one line is used to feed a salt filled tank, creating a saturated brine, the other line acting as a dilution stream prior to the step c).

3. The method of any of the claims 1 to 2 wherein after the step c) the oxidant solution obtained in the step c) is stored in a mixed oxidants storage tank.

4. The method of claim 3 wherein the concentration of the oxidants in the solution stored is from 7000 to 8000 ppm.

5. The method according any of the claims 1 to 4 wherein after the step c) the hydrogen gas produced in the reactor is removed from the reactor and/or from the mixed oxidants storage tank.

6. The method according any of the claims 1 to 5 wherein before the step a) there is a step of washing the cell in the reactor passing a reverse current.

7. The method according any of the claims 1 to 6 wherein the water in the step a) is between 18°C and 48°C.

8. The method according any of the claims 1 to 7 wherein the pressure of the water in the step a) is between 25 and 100 psi.

9. The method according any of the claims 1 to 8 wherein in the step a) an acid selected from: hydrochloric acid, sulfuric acid or nitric acid is mixed together with the water and the brine.

10. An onsite generation system comprising:
a)a brine tank (2);
b)a water tank (3);
c)the brine and the water tank feed a mixed tank (4);
d)the mixed tank (4) feeds a reactor (5) that comprises from three to five electrochemical cells; and
e)a dosing (8) or chemical pump to pump the product obtained in the reactor.

11. The onsite generation system of claim 7 wherein the onsite generation system comprised an oxidants solution storage tank (7).

12. The onsite generation system according claim 11 wherein the reactor (5) and the oxidants solution storage tank (7) includes vents and/or dilution air blowers to removed hydrogen.

13. A oxidant solution comprising: ozone, hydrogen peroxide, chlorine dioxide, chlorine gas, hypochlorite salt, hypochlorous acid and oxygen, wherein the pH is from 6,5 to 9
